# EUROPÄISCHE PATENTSCHRIFT

(11) **EP 3 361 178 B1**
(45) Veröffentlichungstag und Bekanntmachung des Hinweises auf die Patenterteilung: **10.03.2021**
(21) Anmeldenummer: 18151783.0
(22) Anmeldetag: 16.01.2018
(51) Int. Cl.: F24H 4/00, F23J 15/08, F24D 19/10, F24F 5/00

(54) **VERFAHREN UND ANLAGE ZUM HEIZEN UND/ODER KÜHLEN VON RÄUMEN**
METHOD AND INSTALLATION FOR HEATING AND/OR COOLING SPACES
PROCÉDÉ ET INSTALLATION DE CHAUFFAGE ET/OU DE REFROIDISSEMENT D'ESPACES

(30) Priorität: 26.01.2017 DE 102017000715
(43) Veröffentlichungstag der Anmeldung: 15.08.2018
(73) Patentinhaber: Kamax GmbH, 83365 Nussdorf (DE)
(72) Erfinder: Langgartner, Andreas, 84558 Kirchweidach (DE)
(74) Vertreter: Leinweber & Zimmermann

(56) Entgegenhaltungen:
- EP-A1- 0 013 018
- EP-A1- 2 937 644
- EP-A2- 2 336 652
- DE-A1- 2 647 216
- DE-A1- 3 149 183
- DE-A1- 19 938 019
- DE-U1-202013 010 117
- US-A- 4 375 831
- US-A- 4 976 464
- US-A- 5 772 113

## Beschreibung

Die Erfindung bezieht sich auf ein Verfahren zum Heizen und/oder Kühlen von Räumen, bei dem ein Gasstrom durch thermischen Kontakt mit einem Verdampfer eines Wärmepumpenkreislaufs durch Wärmeentzug abgekühlt und die entzogene Wärme durch thermischen Kontakt mit einem Kondensator des Wärmepumpenkreislaufs abgeführt wird, und auf eine zur Durchführung dieses Verfahrens geeignete Anlage.

Zum Heizen eines Raumes in einem Gebäude ist es erforderlich, dem Raum aus einer Wärmequelle Wärme zuzuführen, wogegen zum Kühlen aus dem Raum Wärme abgeführt werden muß. Um den für das Heizen erforderlichen Wärmezufluß oder den für das Kühlen erforderlichen Wärmeabfluß zu ermöglichen, muß beim Heizen die Wärme aus einer Wärmequelle zugeführt werden, deren Temperatur über der gewünschten Raumtemperatur liegt, wogegen beim Kühlen die Wärme an eine Wärmesenke abfließen muß, deren Temperatur unter der gewünschten Raumtemperatur liegt. In beiden Fällen ist die Aufrechterhaltung des erforderlichen Temperaturgefälles mit einem Energieverbrauch verbunden. Dasselbe gilt für den Fall, daß statt der Beheizung eines Raumes Warmwasser bereitet wird. Deshalb soll im Folgenden unter "Heizen" ggf. auch die Warmwasserbereitung verstanden werden.

Eine bekannte Anlage zum Heizen und/oder Kühlen eines Wohnhauses (US 4,375,831 A) weist einen unterhalb Frosttiefe angeordneten großen Wassertank auf, dessen Wasserinhalt in einem Kreislauf durch einen Tiefbrunnen hindurch umgewälzt und dadurch konstant auf Grundwassertemperatur gehalten wird. Ferner wird die Raumluft des Wohnhauses in einem Kreislauf umgewälzt, in dem ein Wärmetauscher einer Wärmepumpe angeordnet ist. Im Heizbetrieb wird durch diesen Wärmetauscher an die Raumluft Wärme abgegeben, die mittels der Wärmepumpe dem Wassertank entnommen wird. Im Kühlbetrieb wird die Wärmepumpe in umgekehrter Richtung betrieben, wodurch an dem Wärmetauscher Wärme aus der Raumluft entnommen und an den Wassertank abgegeben wird. In beiden Betriebsarten bleibt die Temperatur im Wassertank unverändert

Die deutsche Patentanmeldung DE2647216A1 beschreibt ein Heizungssystem mit Heizkessel und Wärmepumpe und einen wasserführenden Heizkreis mit Vor- und Rücklaufleitung. Der Verdampfer der Wärmepumpe wird mit Außenluft beaufschlagt, wobei je nach Temperatur der Außenluft der Heizkessel in Betrieb genommen wird und dessen warmes Abgas dem Außenluftstrom stromaufwärts des Verdampfers zugemischt wird. Der vom Verdampfer abgekühlte Außenluftstrom kann anschließend zur Gebäudekühlung verwendet werden.

Der Erfindung liegt die Aufgabe zugrunde, ein Verfahren und eine Anlage der eingangs genannten Art zu schaffen, die eine bessere Energieeffizienz aufweisen.

Erfindungsgemäß wird diese Aufgabe hinsichtlich des Verfahrens dadurch gelöst, dass mit dem abgekühlten Gasstrom einem in einem zur raumkühlenden Wärmeaufnahme geeigneten ersten Temperaturbereich betriebenen ersten Wärmespeicher Wärme entzogen wird, aus dem Wasser zu Kühlzwecken in an den Verteiler angeschlossene Heizkreise eingespeist und im Kreislauf aus dem Sammler zu dem ersten Wärmespeicher zurückgeführt wird.

Vorzugsweise wird die vom Kondensator abgeführte Wärme an einen in einem zur raumheizenden und/oder brauchwasserheizenden Wärmeabgabe geeigneten zweiten Temperaturbereich betriebenen zweiten Wärmespeicher abgegeben.

Bei dem erfindungsgemäßen Verfahren werden durch den Wärmepumpenkreislauf die für den Wärmeaustausch beim Heizen bzw. Kühlen erforderlichen Temperaturen eingestellt. Dem Gasstrom, dessen Temperatur unterhalb des zur raumheizenden und/oder brauchwasserheizenden Wärmeabgabe geeigneten zweiten Temperaturbereichs liegen kann, wird Wärme durch thermischen Kontakt mit dem Verdampfer des Wärmepumpenkreislaufs entzogen und der Gasstrom dadurch abgekühlt. Am Kondensator des Wärmepumpenkreislaufs ist die Temperatur durch den Wärmepumpeneffekt so weit erhöht, dass dort die entzogene Wärme durch thermischen Kontakt beispielsweise an den in einem zur raumheizenden und/oder brauchwasserheizenden Wärmeabgabe geeigneten zweiten Temperaturbereich betriebenen zweiten Wärmespeicher abgegeben werden kann. Dadurch steht die in dem zweiten Wärmespeicher gespeicherte thermische Energie für die Raumheizung und/oder Warmwasserbereitung zur Verfügung. Gleichzeitig wird mit dem an dem Verdampfer des Wärmepumpenkreislaufs abgekühlten Gasstrom dem ersten Wärmespeicher Wärme entzogen. Dadurch wird letzterer in dem zur raumkühlenden Wärmeaufnahme geeigneten ersten Temperaturbereich betrieben.

Als Quelle für den Gasstrom gibt es je nach den Gegebenheiten des Gebäudes unterschiedliche Möglichkeiten. Insbesondere kann der Gasstrom ein mit Abwärme beladener Luftstrom sein. Dies bietet sich beispielsweise in Gebäuden an, in denen ein Schwimmbecken vorhanden ist, dessen Abluft den Gasstrom bildet.

Eine besonders zweckmäßige Ausführungsform besteht darin, dass der Gasstrom ein aus einem Brenner eines Heizkessels ausströmender, von in den Brenner einströmender Umgebungsluft gespeister Gasstrom ist. Im Falle eines Gebläsebrenners kann dessen Gebläse zur Förderung des Gasstroms dienen. Wenn die Flamme des Brenners brennt, enthält der ausströmende Gasstrom deren Abgase. Bei ausgeschalteter Flamme besteht der Gasstrom aus der einströmenden Umgebungsluft. Im Falle eines Gebläsebrenners wird bei ausgeschalteter Flamme das Gebläse weiterhin in Betrieb gehalten und fördert dadurch den Gasstrom.

In vorrichtungsmäßiger Hinsicht wird die der Erfindung zugrundeliegende Aufgabe gelöst durch eine Anlage zum Heizen und/oder Kühlen von Räumen, mit einem von einem Brenner befeuerten Heizkessel, an den ein Heizwasserkreislauf einer Warmwasserraumheizung mit einer Vorlaufleitung, in der in dem Heizkessel aufgeheiztes Heizwasser einem Verteiler zuführbar ist, und einer Rücklaufleitung, von der das durch die Wärmeabgabe abgekühlte Heizwasser von einem Sammler zum Heizkessel zurückführbar ist, angeschlossen ist, einem einen Verdampfer, einen Verdichter, einen Kondensator und ein Expansionsventil aufweisenden Wärmepumpenkreislauf, dessen Verdampfer in thermischem Kontakt mit einem Gasstrom steht und dessen Kondensator mit einem Ladekreislauf eines in einem zur raumheizenden und/oder brauchwasserheizenden Wärmeabgabe geeigneten zweiten Temperaturbereich betriebenen zweiten Wärmespeichers in thermischem Kontakt steht, die gekennzeichnet ist durch einen Wärmetauscher, dessen kalte Seite mit dem Gasstrom stromabwärts des Verdampfers und dessen warme Seite mit einem Ladekreislauf eines in einem zur raumkühlenden Wärmeaufnahme geeigneten ersten Temperaturbereich betriebenen ersten Wärmespeichers in thermischem Kontakt steht, aus dem Wasser zu Kühlzwecken in an den Verteiler angeschlossene Heizkreise einspeisbar und im Kreislauf aus dem Sammler zum ersten Wärmespeicher zurückführbar ist.

Die erfindungsgemäße Anlage eignet sich insbesondere zur Durchführung des erfindungsgemäßen Verfahrens. In dem Wärmepumpenkreislauf wird der Kondensator bei Temperaturen betrieben, bei denen der mit dem Kondensator in thermischem Kontakt stehende Ladekreislauf Wärme an den in einem zur raumheizenden und/oder brauchwasserheizenden Wärmeabgabe geeigneten zweiten Temperaturbereich betriebenen zweiten Pufferspeicher überträgt. Der Betrieb des Verdampfers erfolgt bei Temperaturen, bei denen der an dem Verdampfer abgekühlte Gasstrom die damit in thermischem Kontakt stehende kalte Seite des Wärmetauschers so weit abkühlt, dass durch den mit dessen warmer Seite in thermischem Kontakt stehenden Ladekreislauf des ersten Pufferspeichers Wärme aus dem ersten Pufferspeicher entzogen wird. Dadurch wird der erste Pufferspeicher in einem ersten Temperaturbereich gehalten, in dem er Wärme aus einem zu kühlenden Raum aufnehmen kann. Der zweite Pufferspeicher bildet dadurch ein Wärmereservoir, aus dem Wärme zum Heizen oder zur Warmwasserbereitung entnommen werden kann. Dagegen bildet der erste Pufferspeicher ein Kältereservoir, das Wärme aus einem zu kühlenden Raum aufnehmen kann.

Der zweite und der erste Pufferspeicher müssen nicht notwendigerweise als räumlich getrennte Einheiten ausgeführt sein. Sie können als kalter bzw. warmer Bereich eines einzigen Schichtenspeichers ausgebildet sein.

Nachstehend wird die Erfindung unter Bezugnahme auf die einzige schematische Zeichnungsfigur beispielhaft erläutert.

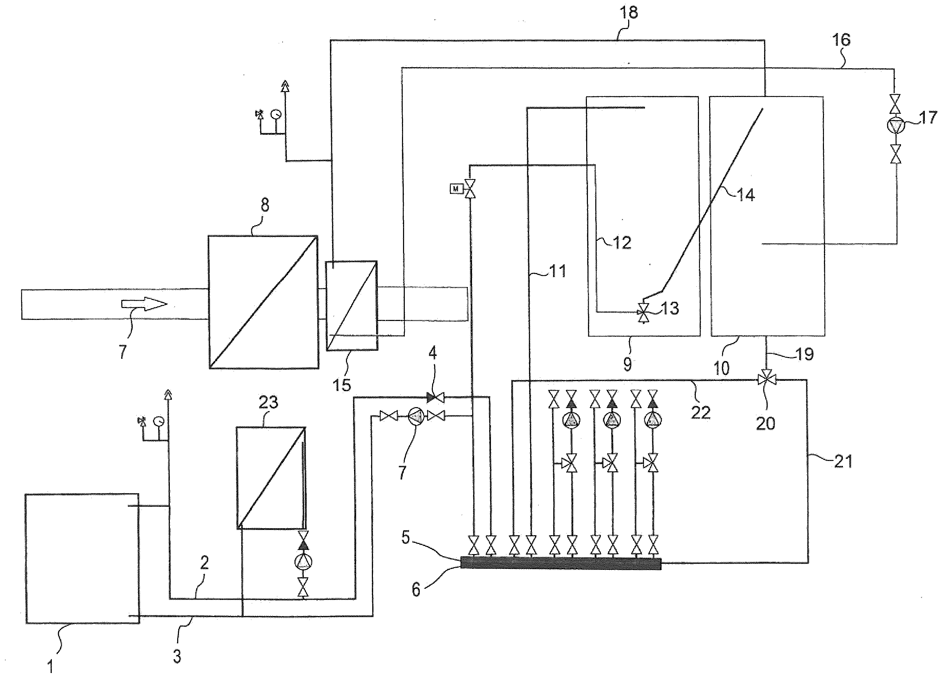

In der Zeichnung symbolisiert ein Block 1 einen Heizkessel, an den ein Heizwasserkreislauf mit einer Vorlaufleitung 2 und einer Rücklaufleitung 3 angeschlossen ist. In der Vorlaufleitung 2 fließt in dem Heizkessel 1 aufgeheiztes Heizwasser über ein Rückschlagventil 4 in einen Verteiler 5 einer Warmwasserraumheizung. Von einem Sammler 6 der Warmwasserraumheizung wird das durch Wärmeabgabe abgekühlte Heizwasser über die Rücklaufleitung 3 und eine in der Rücklaufleitung 3 vorgesehene Umwälzpumpe 7 zum Heizkessel 1 zurückgeführt.

Der Heizkessel 1 ist von einem nicht dargestellten Brenner befeuert, dem beispielsweise mit einem Brennergebläse Umgebungsluft als Verbrennungsluft zugeführt wird. Bei laufender Brennerflamme speist dieser einströmende Luftstrom einen aus dem Heizkessel ausströmenden, mit den Verbrennungsabgasen beladenen Gasstrom, der in der Zeichnung durch einen Pfeil 7 symbolisch angedeutet ist. Wenn die Brennerflamme ausgeschaltet ist und das Brennergebläse in Betrieb bleibt, entspricht der Gasstrom 7 dem einströmenden Umgebungsluftstrom.

Der Gasstrom 7 wird über einen unter dem Bezugszeichen 8 symbolisch dargestellten Verdampfer eines Wärmepumpenkreislaufs geführt und gibt an diesen durch thermischen Kontakt Wärme an ein in dem Wärmepumpenkreislauf zirkulierendes Kältemittel ab. Das dadurch in dem Verdampfer 8 verdampfte Kältemittel wird in einem in der Zeichnung nicht dargestellten Verdichter adiabatisch verdichtet und gibt beim anschließenden Durchlauf durch einen ebenfalls nicht dargestellten Kondensator durch Wärmekontakt mit der Rücklaufleitung 3 des Heizwasserkreislaufs an diesen Wärme ab. Nach dem Durchgang durch den Kondensator wird das Kältemittel in einem Expansionsventil des Wärmepumpenkreislaufs adiabatisch entspannt und zum Verdampfer 8 zurückgeführt.

Mit dem in dem Heizkreislauf des Heizkessels 1 zirkulierenden Heizwasser und dem von dem Verdampfer 8 des Wärmepumpenkreislaufs abströmenden abgekühlten Gasstrom stehen ein zweiter Pufferspeicher 9 und ein erster Pufferspeicher 10 folgendermaßen in thermischer Verbindung:

Der zweite Pufferspeicher 9 ist über eine in seinem oberen Bereich mündende Leitung 11 mit dem Verteiler 5 verbunden. Ferner verbindet eine Leitung 12 den Sammler 6 mit einem Anschluß eines im unteren Bereich des zweiten Pufferspeichers 9 angeordneten Dreiwegeventils 13, von dessen beiden anderen Anschlüssen der eine mit dem zweiten Pufferspeicher 9 in Verbindung steht und der andere mit dem ersten Pufferspeicher 10 über eine Leitung 14 verbunden ist, die im oberen Bereich des ersten Pufferspeichers 10 mündet.

Das Dreiwegeventil 13 weist eine erste Ventilstellung auf, in der der Strömungsweg zwischen der Leitung 12 und dem mit dem zweiten Pufferspeicher 9 verbundenen Anschluß geöffnet, dagegen der mit der Leitung 14 verbundene Anschluß geschlossen ist. Dagegen ist in einer zweiten Ventilstellung der mit dem Pufferspeicher 9 verbundene Anschluß geschlossen und ein Strömungsweg zwischen den Leitungen 12 und 14 geöffnet.

In der ersten Ventilstellung kann daher der zweite Pufferspeicher 9 in dem von dem Verteiler 5, der Leitung 11, dem Dreiwegeventil 13, der Leitung 12 und dem Sammler 6 gebildeten Kreislauf mit Heizwasser beladen werden. Dadurch stellt dieser Kreislauf einen Ladekreislauf für den zweiten Pufferspeicher 9 dar. Durch Umkehrung der Flußrichtung kann die Wärme aus dem zweiten Pufferspeicher 9 über diesen Kreislauf an Wärmeverbraucher abgegeben werden, die beispielsweise auf die in der Zeichnung dargestellte Weise an den Verteiler 5 und den Sammler 6 angeschlossen sind.

Der durch den thermischen Kontakt mit dem Verdampfer 8 abgekühlte Gasstrom 7 durchströmt die kalte oder wärmeaufnehmende Seite eines Wärmetauschers 15, an dessen warme oder wärmeabgebende Seite ein Wasserkreislauf angeschlossen ist, der sich mittels einer Leitung 16 und einer darin vorgesehenen Umwälzpumpe 17 zu einem unteren Bereich des ersten Pufferspeichers 10 erstreckt und mittels einer Leitung 18 von einem oberen Bereich des ersten Pufferspeichers 10 zur wärmeabgebenden Seite des Wärmetauschers 15 zurückgeführt ist. Hierdurch wird ein Ladekreis für den ersten Pufferspeicher 10 gebildet, in dem ein Wärmetransport von dem ersten Pufferspeicher 10 zum Wärmetauscher 15 hin erfolgt.

An das untere Ende des ersten Pufferspeichers 10 ist über eine Leitung 19 ein Anschluß eines Dreiwegeventils 20 angeschlossen, von dessen beiden anderen Anschlüssen der eine über eine Leitung 21 mit dem Verteiler 5 und der andere über eine Leitung 22 mit dem Sammler 6 verbunden ist. Dadurch kann in einer Ventilstellung, in der ein Strömungsweg zwischen der Leitung 19 und der Leitung 21 geöffnet ist, Wasser zu Kühfzwecken aus dem ersten Pufferspeicher 10 in an den Verteiler 5 angeschlossene Heizkreise eingespeist und im Kreislauf aus dem Sammler 6 über die Leitung 12, das Dreiwegeventil 13 und die Leitung 14 zum ersten Pufferspeicher 19 zurückgeführt werden. In der anderen Ventilstellung, in der ein Strömungsweg zwischen der Leitung 19 und der Leitung 22 geöffnet ist, besteht alternativ die Möglichkeit einer Befüllung des ersten Pufferspeichers 10 mit Warmwasser aus dem zweiten Pufferspeicher 9.

Die vorstehend anhand der Zeichnung erläuterten Ausgestaltungen der Ladekreise für den zweiten Pufferspeicher 9 und den ersten Pufferspeicher 10 sind rein beispielhaft und können auf jede andere Weise ausgestaltet sein, die es ermöglicht, dem zweiten Pufferspeicher 9 Wärme zuzuführen und dem ersten Pufferspeicher 10 durch Wärmekontakt mit dem an dem Verdampfer 8 abgekühlten Abgas 7 Wärme zu entziehen.

Zusätzlich kann an die Vorlaufleitung 2 und die Rücklaufleitung 3 ein Kühler 23 angeschlossen sein, durch den Wärme an die Umgebungsluft abgegeben werden kann.

### Verzeichnis der Bezugszeichen

- 1: Heizkessel
- 2: Vorlaufleitung
- 3: Rücklaufleitung
- 4: Rückschlagventil
- 5: Verteiler
- 6: Sammler
- 7: Gasstrom
- 8: Verdampfer
- 9: zweiter Pufferspeicher
- 10: erster Pufferspeicher
- 11: Leitung
- 12: Leitung
- 13: Dreiwegeventil
- 14: Leitung
- 15: Wärmetauscher
- 16: Leitung
- 17: Umwälzpumpe
- 18: Leitung
- 19: Leitung
- 20: Dreiwegeventil
- 21: Leitung
- 22: Leitung
- 23: Kühler

## Patentansprüche

1. Verfahren zum Heizen und/oder Kühlen von Räumen mit einer Warmwasserraumheizung, durch die in einem an einen Heizkessel (1) angeschlossenen Heizwasserkreislauf in einer Vorlaufleitung (2) in dem Heizkessel (1) aufgeheiztes Heizwasser in einen Verteiler (5) fließt und in einer Rücklaufleitung (3) das durch Wärmeabgabe abgekühlte Heizwasser von einem Sammler (6) zum Heizkessel (1) zurückgeführt wird, bei dem ein Gasstrom (7) durch thermischen Kontakt mit einem Verdampfer (8) eines Wärmepumpenkreislaufs durch Wärmeentzug abgekühlt und die entzogene Wärme durch thermischen Kontakt mit einem Kondensator des Wärmepumpenkreislaufs abgeführt wird, **dadurch gekennzeichnet, daß** mit dem abgekühlten Gasstrom einem in einem zur raumkühlenden Wärmeaufnahme geeigneten ersten Temperaturbereich betriebenen ersten Wärmespeicher (10) Wärme entzogen wird, aus dem Wasser zu Kühlzwecken in an den Verteiler (5) angeschlossene Heizkreise eingespeist und im Kreislauf aus dem Sammler (6) zu dem ersten Wärmespeicher (10) zurückgeführt wird.

2. Verfahren nach Anspruch 1, **dadurch gekennzeichnet, daß** die abgeführte Wärme an einen in einem zur raumheizenden und/oder brauchwasserheizenden Wärmeabgabe geeigneten zweiten Temperaturbereich betriebenen zweiten Wärmespeicher abgegeben wird.

3. Verfahren nach Anspruch 1 oder 2, **dadurch gekennzeichnet, daß** der Gasstrom (7) ein mit Abwärme beladener Luftstrom ist.

4. Verfahren nach Anspruch 1 oder 2, **dadurch gekennzeichnet, daß** der Gasstrom (7) ein aus einem Brenner eines Heizkessels (1) ausströmender, von in den Brenner einströmender Umgebungsluft gespeister Gasstrom ist.

5. Verfahren nach Anspruch 4, **dadurch gekennzeichnet, daß** der Gasstrom (7) von einem Gebläse des Brenners gefördert wird.

6. Verfahren nach einem der Ansprüche 1 bis 5, **dadurch gekennzeichnet, daß** aus dem zweiten Wärmespeicher (9) Wärme an einen zu beheizenden Raum und/oder an aufzuheizendes Brauchwasser abgegeben wird.

7. Verfahren nach einem der Ansprüche 1 bis 6, **dadurch gekennzeichnet, daß** in den ersten Wärmespeicher (10) Wärme aus einem zu kühlenden Raum aufgenommen wird.

8. Anlage zum Heizen und/oder Kühlen von Räumen, mit einem von einem Brenner befeuerten Heizkessel, an den ein Heizwasserkreislauf einer Warmwasserraumheizung mit einer Vorlaufleitung (2), in der in dem Heizkessel (1) aufgeheiztes Heizwasser einem Verteiler (5) zuführbar ist, und einer Rücklaufleitung (3), von der das durch die Wärmeabgabe abgekühlte Heizwasser von einem Sammler (6) zum Heizkessel (1) zurückführbar ist, angeschlossen ist, einem einen Verdampfer, einen Verdichter, einen Kondensator und ein Expansionsventil aufweisenden Wärmepumpenkreislauf, dessen Verdampfer in thermischem Kontakt mit einem Gasstrom steht und dessen Kondensator mit einem Ladekreislauf eines in einem zur raumheizenden und/oder brauchwasserheizenden Wärmeabgabe geeigneten zweiten Temperaturbereich betriebenen zweiten Wärmespeichers in thermischem Kontakt steht, **gekennzeichnet durch** einen Wärmetauscher (15), dessen kalte Seite mit dem Gasstrom (7) stromabwärts des Verdampfers (8) und dessen warme Seite mit einem Ladekreislauf eines in einem zur raumkühlenden Wärmeaufnahme geeigneten ersten Temperaturbereich betriebenen ersten Wärmespeichers (10) in thermischem Kontakt steht, aus dem Wasser zu Kühlzwecken in an den Verteiler (5) angeschlossene Heizkreise einspeisbar und im Kreislauf aus dem Sammler (6) zum ersten Wärmespeicher (10) zurückführbar ist.

9. Anlage nach Anspruch 8, **dadurch gekennzeichnet, daß** der Gasstrom (7) ein mit Abwärme beladener Luftstrom ist.

10. Anlage nach Anspruch 8, **dadurch gekennzeichnet, daß** der Gasstrom (7) ein aus einem Brenner des Heizkessels (1) ausströmender, von in den Brenner einströmender Umgebungsluft gespeister Gasstrom ist.

11. Anlage nach Anspruch 10, **dadurch gekennzeichnet, daß** der Brenner ein den Gasstrom (7) förderndes Gebläse aufweist.

## Claims

1. A method for heating and/or cooling rooms using a hot water room heating system through which, in a heating water circuit connected to a heating boiler (1), heating water which is heated in a feed line (2) in the heating boiler (1), flows into a distributor (5), and the heating water cooled as a result of the release of heat is returned in a return line (3) from a collector (6) to the heating boiler (1), in which method a gas flow (7) is cooled by means of an extraction of heat as a result of thermal contact with an evaporator (8) of a heat pump circuit and the extracted heat is discharged by means of thermal contact with a condenser of the heat pump circuit, **characterised in that**, by means of the cooled gas flow, heat is extracted from a first heat accumulator (10), which is operated in a first temperature range suitable for absorbing heat to cool rooms, and from which water used for cooling purposes is fed into heating circuits connected to the distributor (5) and is returned, in the circuit, from the collector (6) to the first heat accumulator (10).

2. The method according to claim 1, **characterised in that** the discharged heat is released to a second heat accumulator operated in a second temperature range suitable for releasing heat for heating rooms and/or heating service water.

3. The method according to claim 1 or 2, **characterised in that** the gas flow (7) is an air flow laden with waste heat.

4. The method according to claim 1 or 2, **characterised in that** the gas flow (7) is a gas flow emanating from a burner of a heating boiler (1) and fed by ambient air flowing into the burner.

5. The method according to claim 4, **characterised in that** the gas flow is delivered by a blower of the burner.

6. The method according to one of claims 1 to 5, **characterised in that** heat is released from the second heat accumulator (9) to a room to be heated and/or to service water to be heated.

7. The method according to one of claims 1 to 6, **characterised in that** heat from a room to be cooled is absorbed in the first heat accumulator (10).

8. A plant for heating and/or cooling rooms, comprising: a heating boiler fired by a burner, to which boiler a heating water circuit of a hot water room heating system is connected, said heating system including a feed line (2) in which water heated in the heating boiler (1) can be fed to a distributor (5), and a return line (3) by means of which the heating water cooled by the release of heat can be returned from a collector (6) to the heating boiler (1); and a heat pump circuit having an evaporator, a compressor, a condenser and an expansion valve, the evaporator of which heat pump circuit is in thermal contact with a gas flow and the condenser is in thermal contact with a charging circuit of a second heat accumulator operated in a second temperature range suitable for releasing heat which can be used for heating rooms and/or heating service water, **characterised by** a heat exchanger (15), the cold side of which is in thermal contact with the gas flow (7) downstream of the evaporator (8) and the hot side of which is in thermal contact with a charging circuit of a first heat accumulator (10) which is operated in a first temperature range suitable for absorbing heat to cool rooms, and from which water used for cooling purposes can be fed into the heating circuits connected to the distributor (5) and can be returned, in the circuit, from the collector (6) to the first heat accumulator (10).

9. The plant according to claim 8, **characterised in that** the gas flow (7) is an air flow laden with waste heat.

10. The plant according to claim 8, **characterised in that** the gas flow (7) is a gas flow emanating from a burner of the heating boiler (1) and fed by ambient air flowing into the burner.

11. The plant according to claim 10, **characterised in that** the burner has a blower delivering the gas flow (7).

## Revendications

1. Procédé de chauffage et/ou de refroidissement de pièces au moyen d'un système de chauffage de pièces à eau chaude dans lequel, dans un circuit d'eau de chauffage relié à une chaudière (1), de l'eau de chauffage chauffée dans une conduite d'amenée (2) dans la chaudière (1) passe à un distributeur (5) et est renvoyée dans une conduite de retour (3) en étant refroidie par déperdition de chaleur, depuis un collecteur (6) jusqu'à la chaudière (1), dans lequel procédé un flux de gaz (7) est refroidi par extraction de chaleur par contact thermique avec un évaporateur (8) d'un circuit de pompe à chaleur et la chaleur extraite est évacuée par contact thermique avec un condenseur du circuit de pompe à chaleur, **caractérisé en ce que** de la chaleur est extraite, grâce au flux de gaz refroidi, d'un premier accumulateur de chaleur (10) qui fonctionne dans une première plage de températures adaptées à l'absorption de chaleur visant à refroidir des pièces et à partir duquel de l'eau destinée à des fins de refroidissement est injectée dans des circuits de chauffage reliés au distributeur (5) et est renvoyée dans le circuit, depuis le collecteur (6) jusqu'au premier accumulateur de chaleur (10).

2. Procédé selon la revendication 1, **caractérisé en ce que** la chaleur évacuée est transmise à un deuxième accumulateur de chaleur fonctionnant dans une deuxième plage de températures adaptées à la transmission de chaleur servant au chauffage de pièces et/ou au chauffage de l'eau sanitaire.

3. Procédé selon la revendication 1 ou 2, **caractérisé en ce que** le flux de gaz (7) est un flux d'air chargé de chaleur perdue.

4. Procédé selon la revendication 1 ou 2, **caractérisé en ce que** le flux de gaz (7) est un flux de gaz sortant d'un brûleur d'une chaudière (1) et ayant été alimenté en air ambiant introduit dans ledit brûleur.

5. Procédé selon la revendication 4, **caractérisé en ce que** le flux de gaz est apporté par une soufflante du brûleur.

6. Procédé selon l'une des revendications 1 à 5, **caractérisé en ce que** de la chaleur issue du deuxième accumulateur de chaleur (9) est transmise à une pièce à chauffer et/ou à de l'eau sanitaire à chauffer.

7. Procédé selon l'une des revendications 1 à 6, **caractérisé en ce que** de la chaleur provenant d'une pièce à refroidir est absorbée dans le premier accumulateur de chaleur (10).

8. Installation de chauffage et/ou de refroidissement de pièces comportant : une chaudière chauffée par un brûleur et à laquelle est relié un circuit d'eau de chauffage d'un système de chauffage de pièces à eau chaude qui comporte une conduite d'amenée (2) dans laquelle de l'eau de chauffage chauffée dans la chaudière (1) peut être amenée à un distributeur (5) et qui comporte une conduite de retour (3) par laquelle l'eau de chauffage refroidie par déperdition de chaleur peut être renvoyée depuis un collecteur (6) jusqu'à la chaudière (1) ; et un circuit de pompe à chaleur présentant un évaporateur, un compresseur, un condenseur et une soupape de détente et dont l'évaporateur est en contact thermique avec un flux de gaz et le condenseur est en contact thermique avec un circuit de charge d'un deuxième accumulateur de chaleur fonctionnant dans une deuxième plage de températures adaptées à la transmission de chaleur servant au chauffage de pièces et/ou au chauffage de l'eau sanitaire ; **caractérisée par** un échangeur de chaleur (15) dont le côté froid est en contact thermique avec le flux de gaz (7) en aval de l'évaporateur (8) et le côté chaud est en contact thermique avec un circuit de charge d'un premier accumulateur de chaleur (10) fonctionnant dans une première plage de températures adaptées à l'absorption de chaleur visant à refroidir des pièces et à partir duquel de l'eau destinée à des fins de refroidissement peut être injectée dans des circuits de chauffage reliés au distributeur (5) et peut être renvoyée dans le circuit, depuis le collecteur (6) jusqu'au premier accumulateur de chaleur (10).

9. Installation selon la revendication 8, **caractérisée en ce que** le flux de gaz (7) est un flux d'air chargé de chaleur perdue.

10. Installation selon la revendication 8, **caractérisée en ce que** le flux de gaz (7) est un flux de gaz sortant d'un brûleur de la chaudière (1) et ayant été alimenté en air ambiant introduit dans ledit brûleur.

11. Installation selon la revendication 10, **caractérisée en ce que** le brûleur présente une soufflante destinée à apporter le flux de gaz (7).
